(19) Europäisches Patentamt
European Patent Office
Office européen des brevets

(11) EP 0 697 441 B1

(12) EUROPÄISCHE PATENTSCHRIFT

(45) Veröffentlichungstag und Bekanntmachung des Hinweises auf die Patenterteilung:
**07.11.2001 Patentblatt 2001/45**

(21) Anmeldenummer: **95112278.7**

(22) Anmeldetag: **04.08.1995**

(51) Int Cl.[7]: **C08L 69/00**, C08K 5/523
// (C08L69/00, 25:02, 51:04, 71:12),
(C08L69/00, 33:06, 51:04, 71:12),
(C08L69/00, 67:02, 51:04, 71:12),
(C08L69/00, 51:04, 71:12)

# (54) Flammgeschützte thermoplastische Polycarbonat-Formmassen

Flame retardant thermoplastic polycarbonatemoulding compositions

Masses à mouler thermoplastiques ignifugées à base de polycarbonate

(84) Benannte Vertragsstaaten:
**DE ES FR GB IT NL**

(30) Priorität: **18.08.1994 DE 4429319**

(43) Veröffentlichungstag der Anmeldung:
**21.02.1996 Patentblatt 1996/08**

(73) Patentinhaber: **BAYER AG**
**51368 Leverkusen (DE)**

(72) Erfinder:
- **Fuhr, Karl, Dr.**
  **D-47803 Krefeld (DE)**
- **Eckel, Thomas, Dr.**
  **D-41540 Dormagen (DE)**
- **Wittmann, Dieter, Dr.**
  **D-51375 Leverkusen (DE)**
- **Alberts, Heinrich, Dr.**
  **D-51519 Odenthal (DE)**

(56) Entgegenhaltungen:

| | |
|---|---|
| **EP-A- 0 133 641** | **EP-A- 0 522 397** |
| **EP-A- 0 522 653** | **DE-A- 4 200 247** |

- **DATABASE WPI Week 9413 Derwent Publications Ltd., London, GB; AN 94-106993 XP002002681 & JP-A-06 057 159 (ASAHI CHEM. IND. CO. LTD.) , 1.März 1994**
- **PATENT ABSTRACTS OF JAPAN vol. 95, no. 4, 31.Mai 1995 & JP-A-07 026129 (NIPPON STEEL CHEM. CO. LTD.), 27.Januar 1995,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft halogenfrei flammgeschützte thermoplastische Formmassen aus Polycarbonat und Pfropfpolymerisat, die gegebenenfalls thermoplastisches Copolymerisat und/oder Polyalkylenterephthalat enthalten können, wobei Polyphenylenoxid in Kombination mit Phosphor-Verbindungen als Flammschutzmittel eingesetzt wird.

In US-P 5 001 745 und US-P 5 030 675 werden flammwidrige, thermoplastische Formmassen aus aromatischem Polycarbonat, ABS-Polymerisat, Copolymerisat bzw. Polyalkylenterephthalat sowie Monophosphaten und fluorierten Polyolefinen als Flammschutzmittel bzw. als Antidrippingmittel beschrieben. Als Nachteil der fluorierten Polyolefine ist ihr Halogengehalt und der damit im Brandfall austretende Fluorwasserstoff zu nennen. Die Mitverwendung von speziell Polytetrafluorethylen ermöglichte bislang aber allein selbstverlöschende Formmassen aus aromatischen Polycarbonaten, gegebenenfalls thermoplastischen Copolymerisaten und thermoplastischen Polyalkylenterephthalaten sowie Pfropfpolymerisaten mit der Bewertung V-O bei 1,6 mm dicken Prüfkörpern nach UL-94.

In EP 0 363 608 werden Polymermischungen aus aromatischem Polycarbonat, Co- und Pfropfpolymerisaten sowie oligomeren Phosphaten auf Basis von z.B. Hydrochinon und Resorcin als Flammschutzadditive beschrieben. Polyphenylenether werden nicht erwähnt. Der effektive Flammschutz von V-O/1,6 mm nach UL-94 wird nur in Gegenwart von Polytetrafluorethylen bewirkt.

Aus DE-OS 4 200 247 sind thermoplastische Formmassen u a aus aromatischen Polycarbonaten, Polyphenylenethern, Pfropfpolymerisaten, Styrol-Copolymerisaten sowie 0 bis 20 Gew.-% organischer Phosphate und 0 bis 2 Gew.-% Tetrafluorethylenpolymerisate bekannt. Der Erfindung lag die Aufgabe zugrunde, thermoplastische Polycarbonatformmassen mit einem insgesamt guten Eigenschaftsprofil, besonders mit einer erhöhten Wärmeformbeständigkeit, zur Verfügung zu stellen. Dieses wird an den Beispielen 1 und 2, bezogen auf Vergleichsbeispiele, gezeigt. Aus Beispiel 2 geht hervor, daß der Flammschutz von V-O nach UL-94 aus den Komponenten Polyphenylenoxid, Triphenylphosphat und Polytetrafluorethylen besteht. Die Verwendung von Polyphenylenethern mit Phosphaten allein ohne Mitverwendung von Polytetrafluorethylen zur Erzielung eines Flammschutzes von V-O/1,6 mm nach UL-94 wird nicht beschrieben.

In EP-A-522 653 werden ABS-Pfropfkautschuke mit Polyphenylenethern bzw. Novolaken und u.a. Bis-Phosphaten als Flammschutzmittel beschrieben. Auch können typische Copolymerisate oder Polycarbonat mitverwendet werden. Der Flammschutz der jeweiligen Mischung wird in Form des Sauerstoffindexes (LOI-Wert nach ASTM) angegeben. In dem Beispiel 3, Tabelle 3, mit ABS und Polycarbonat (jeweils 40 Gew.-%) werden zum Flammschutz je 10 Gew.-% Polyphenylenether und Hydrochinon-bis-(diphenylphosphat) eingesetzt, der LOI-Wert beträgt 23,5 (relativ niedriger Wert, ohne Beschreibung des Tropfverhaltens). Bei Kenntnis der EP-A-522 653 war nicht anzunehmen, daß durch Austausch des Hydrochinons gegen das Resorcin-bis-(diphenylphosphat) und unter weiterer Mitverwendung von leicht brennbaren typischen Copolymeren ein nichttropfendes V-O/1,6 mm, also ein deutlich höherer Flammschutz ohne Tropfen (halogenfrei, ohne Mitverwendung von Polytetrafluorethylen), zu erzielen ist.

Es wurde gefunden, daß bei Verwendung von 3 bis 8 Gew.-% Polyphenylenoxid in Kombination mit 3 bis 18 Gew.-% Phosphorverbindung gemäß der unten beschriebenen Komponente E) Formmassen aus thermoplastischen aromatischen Polycarbonaten, gegebenenfalls thermoplastischen Copolymerisaten und thermoplastischen Polyalkylenterephthalaten, sowie Pfropfpolymerisaten ein Selbstverlöschen ohne Abtropfen gemäß des Tests nach UL-94 mit der Bewertung V-O bei 1,6 mm dicken Prüfkörpern erzielt wird. Das bisher als Antidrippingmittel eingesetzte Polytetrafluorethylen wird nicht benötigt. Die erfindungsgemäßen Formmassen ermöglichen damit im Brandfall vollkommen halogenfrei und hochwirksam nichttropfende und selbstverloschende Formmassen. Die Verwendung der unten beschriebenen Komponente E.2) ermöglicht dabei eine deutlich verbesserte Spannungsrißbeständigkeit. Die Formmassen zeigen bezüglich Schlag- und Kerbschlagzähigkeit, der Wärmeformbeständigkeit, der Oberflächenbeschaffenheit und der Migration bei Lagerung ein gutes Eigenschaftsprofil.

Gegenstand der vorliegenden Erfindung sind halogenfrei flammgeschützte, im Brandfall nicht brennend abtropfende thermoplastische Formmassen, bestehend aus

A) 60 bis 90 Gew.-%, thermoplastischem aromatischem Polycarbonat,

B) 0 bis 20 Gew.-%, vorzugsweise 1 bis 15 Gew.-%, Copolymerisat bzw. Polykondensat aus

B.1) thermoplastischem Copolymerisat aus

B.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus und

B.1.2) 5 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid, Vinylacetat oder Mischungen daraus und/oder

B.2) thermoplastischem Polyalkylenterephthalat,

C) 3 bis 18 Gew.-%, vorzugsweise 5 bis 15 Gew.-% Pfropfpolymerisat, hergestellt aus

C.1) 5 bis 90 Gew-%, vorzugsweise 30 bis 80 Gew -%, einer Mischung aus

C.1.1) 50 bis 95 Gew.-% Styrol, α-Methylstyrol, kernalkyliertem Styrol, Methylmethacrylat oder Mischungen daraus, und

C.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid oder Mischungen daraus, auf

C.2) 10 bis 95 Gew.-%, vorzugsweise 20 bis 70 Gew.-%, Kautschuk mit einer Glasübergangstemperatur TG ≤10°C,

D) 3 bis 8 Gew.-%, vorzugsweise 3 bis 6 Gew.-%, thermoplastischem Polyphenylenether,

E) 3 bis 18 Gew.-%, vorzugsweise 5 bis 15 Gew.-%, Phosphorsäureester aus

E.1) Phosphorverbindungen der Formel (I),

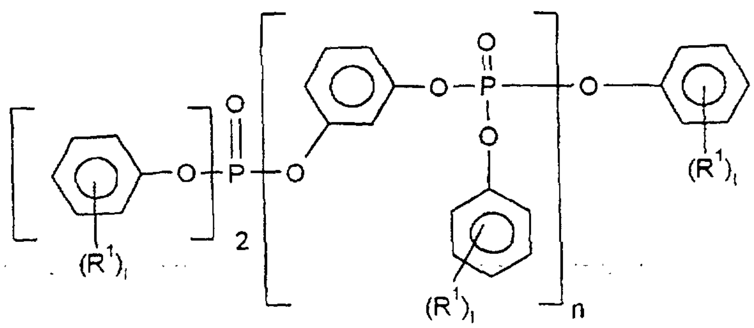

(I)

worin

n die Zahlen 1 bis 5,

$R^1$ Methyl und

l die Zahlen 0 bis 5, vorzugsweise 0 und 1 bis 3, sind;

oder

E.2) einer Mischung aus Phosphorverbindungen der Formel (I) und Phosphorverbindungen der Formel (II),

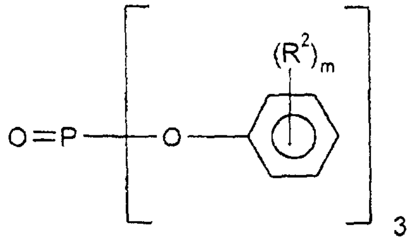

(II)

worin

$R^2$ Methyl und

m die Zahlen 0 oder 1 bis 5, vorzugsweise 0 und 1 bis 3, sind,

wobei die Menge an Phosphorverbindungen der Formel (II) in der Phosphatmischung aus E.1) und E.2) maximal 35 Gew.-%, vorzugsweise maximal 30 Gew.-%, beträgt.

**Komponente A)**

Die erfindungsgemäß geeigneten, thermoplastischen Polycarbonate gemäß Komponente A) können sowohl Homo- als auch Copolycarbonate aus den Diphenolen der Formel (III) sein,

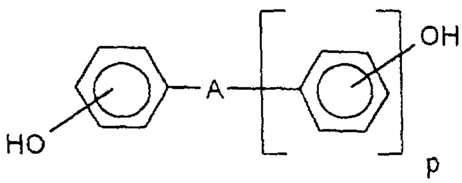

(III)

worin

p 1 oder Null ist und

A eine Einfachbindung, $C_1$-$C_5$-Alkylen, $C_2$-$C_5$-Alkyliden, $C_5$-$C_6$- gegebenenfalls durch Methylgruppen substituiertes $C_5$-$C_6$-Cycloalkyliden, -O-, -S- und -$SO_2$- sein können

Die Polycarbonate gemäß Komponente A) können sowohl linear als auch verzweigt sein, sie können aromatisch gebundene Methylgruppen enthalten und sind halogenfrei. Die Polycarbonate der Komponente A) können sowohl einzeln als auch im Gemisch eingesetzt werden.

Die Diphenole der Formel (III) sind entweder literaturbekannt oder nach literaturbekannten Verfahren herstellbar. Die Herstellung der erfindungsgemäß geeigneten Polycarbonate gemäß Komponente A) ist ebenfalls literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Diphenole der Formel (III) sind z.B. Hydrochinon, Resorcin, 4,4'-Dihydroxydiphenyl, 2,2-Bis-(4-hydroxyphenyl)-propan (Bisphenol A), 2,4-Bis-(4-hydroxyphenyl)-2-methylbutan, 2,2-Bis-(4-hydroxy-3,5-dimethylphenyl)-propan, 1,1-Bis-(4-hydroxyphenyl)-cyclohexan oder 1,1-Bis-(4-hydroxyphenyl)-3,3,5-trimethylcyclohexan. Bevorzugte Diphenole der Formel (I) sind 2,2-Bis-(4-hydroxyphenyl)-propan und 1,1-Bis-(4-hydroxyphenyl)-cyclohexan. Es können auch Mischungen von Diphenolen eingesetzt werden, z.B. aus Bisphenol A und bis zu 60 Mol-% 1,1-Bis-(4-hydroxyphenyl)-3,3,5-trimethylcyclohexan.

Geeignet sind sowohl Homopolycarbonate als auch Copolycarbonate.

Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (IIIa) verwendet werden,

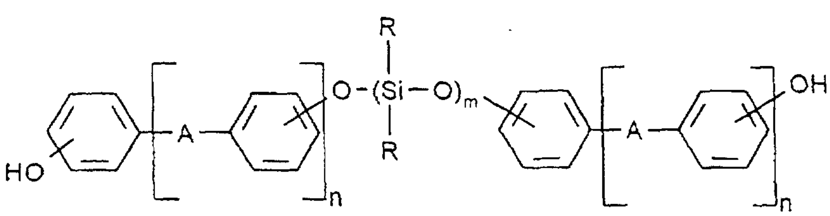

(IIIa)

worin -A- die für Formel (III) genannte Bedeutung hat, n 1 oder null ist, die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl

zwischen 5 und 100, vorzugsweise zwischen 20 und 80 ist. Polydiorganosiloxane mit Hydroxyaryloxy-Endgruppen gemäß Formel (IIIa) sind bekannt (s. beispielsweise US-P 3 419 634) bzw. nach literaturbekannten Verfahren herstellbar. Die Herstellung Polydiorganosiloxan-haltiger Copolycarbonate wird z.B. in DE-OS 3 334 782 beschrieben.

Die Polycarbonate A) können teilweise oder vollständig durch aromatische Polyestercarbonate ersetzt sein.

Geeignete Kettenabbrecher sind z.B. Phenol oder p-tert.-Butylphenol, aber auch langkettige Alkylphenole wie 4-(1,3-Tetramethyl-butyl)-phenol gemäß DE-OS 2 842 005 oder Monoalkylphenole oder Dialkylphenole mit insgesamt 8 bis 20 C-Atomen in den Alkylsubstituenten gemäß deutscher Patentanmeldung 3 506 472, wie z.B. p-Nonylphenol, 2,6-di-tert-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (III).

Die erfindungsgemäß geeigneten Polycarbonate gemäß Komponente A) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen OH-Gruppen.

Die erfindungsgemäß geeigneten Polycarbonate haben mittlere Gewichtsmittelmolekulargewichte ($\overline{M}_w$, gemessen z.B. durch Ultrazentrifugation oder Streulichtmessung) von 10 000 bis 200 000, vorzugsweise von 20 000 bis 80 000.

**Komponente B.1)**

Erfindungsgemäß einsetzbare Vinyl-(Co)Polymerisate gemäß Komponente B.1) sind harzartig, thermoplastisch und kautschukfrei Sie sind solche aus wenigstens einem Monomeren aus der Reihe Styrol, α-Methylstyrol, kernalkyl-substituiertem Styrol, $C_1$-$C_8$-Alkylacrylat, $C_1$-$C_8$-Alkylmethacrylat (Komponente B.1.1) mit wenigstens einem Monomeren aus der Reihe Acrylnitril, Methacrylnitril, $C_1$-$C_8$-Alkylmethacrylat, $C_1$-$C_8$-Alkylacrylat, Maleinsäureanhydrid und/oder N-substituiertem Maleinimid (Komponente B.1.2).

$C_1$-$C_8$-Alkylacrylate bzw. $C_1$-$C_8$-Alkylmethacrylate sind Ester der Acrylsäure bzw. Methacrylsäure und einwertiger Alkohole mit 1 bis 8 C-Atomen. Besonders bevorzugt sind Methacrylsäuremethylester, -ethylester und -propylester. Als besonders bevorzugter Methacrylester wird Methacrylsäuremethylester genannt.

Thermoplastische Copolymerisate mit einer Zusammensetzung gemäß Komponente B.1) können bei der Pfropfpolymerisation zur Herstellung der Komponente C) als Nebenprodukte entstehen, besonders dann, wenn große Mengen Monomere auf kleine Mengen Kautschuk gepfropft werden. Die erfindungsgemäß einzusetzende Menge an Copolymerisat B.1) bezieht diese Nebenprodukte der Pfropfpolymerisation nicht mit ein.

Die thermoplastischen Copolymerisate B.1) enthalten 50 bis 95 Gew.-%, vorzugsweise 60 bis 90 Gew.-% Komponente B.1.1) und 5 bis 50 Gew.-%, vorzugsweise 10 bis 40 Gew.-%, Komponente B.1.2).

Besonders bevorzugte Copolymerisate B.1) sind solche aus Styrol, mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate gemäß Komponente B.1) sind bekannt und lassen sich durch radikalische Polymerisation, insbesondere durch Emulsions-, Suspensions-, Lösungs- oder Massepolymerisation herstellen. Die Copolymerisate gemäß Komponente B.1) besitzen vorzugsweise Molekulargewichte $\overline{M}_w$ (Gewichtsmittel, ermittelt durch Lichtstreuung oder Sedimentation) zwischen 15 000 und 200 000.

Besonders bevorzugte erfindungsgemäße Copolymerisate B.1) sind auch statistisch aufgebaute Copolymerisate aus Styrol, Maleinsäureanhydrid und/oder N-substituiertem Maleinimid, die durch eine kontinuierliche Masse- oder Lösungspolymerisation bei unvollständigen Umsätzen aus dem entsprechenden Monomeren hergestellt werden können.

Die Anteile der beiden Komponenten der erfindungsgemäß geeigneten, statistisch aufgebauten Styrol/Maleinsäureanhydrid-Copolymeren können innerhalb weiter Grenzen variiert werden. Der bevorzugte Gehalt an Maleinsäureanhydrid liegt zwischen 5 und 25 Gew.-%.

Die Molekulargewichte (Zahlenmittel $\overline{M}_n$) der erfindungsgemäß geeigneten, statistisch aufgebauten Styrol/Maleinsaureanhydrid-Copolymeren gemäß Komponente B.1) können in weiten Bereichen variieren. Besonders bevorzugt ist der Bereich von 60 000 bis 200 000.

Bevorzugt ist für diese Produkte eine Grenzviskosität von 0,3 bis 0,9 dl/g (gemessen in Dimethylformamid bei 25°C).

Anstelle von Styrol können die Vinylcopolymerisate B.1) auch kernsubstituierte Styrole wie Vinyltoluole, 2,4-Dimethylstyrol und andere halogenfreie substituierte Styrole wie α-Methylstyrol enthalten.

**Komponente B.2)**

Die Polyalkylenterephthalate der Komponente B.2) sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthal säureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

**Komponente C)**

Die Pfropfpolymerisate C) werden durch radikalische Copolymerisation der Monomergemische C.1) aus C. 1.1) und C.1.2) in Gegenwart der zu pfropfenden Kautschuke C.2) hergestellt und sind durchweg bekannt. Bevorzugte Herstellungsverfahren für die Pfropfpolymerisate C) sind Emulsions-, Lösungs-, Masse- oder Suspensionspolymerisation. Besonders bevorzugte Pfropfpolymerisate C) sind die sogenannten ABS-Polymerisate.

Beispiele für Monomere C.1) sind nach C.1.1) Styrol, α-Methylstyrol, p-Methylstyrol, Methylmethacrylat oder Mischungen daraus. Beispiele für Monomere nach C.1.2) sind Acrylnitril, Methacrylnitril, Methylmethacrylat, n-Butylacrylat, t-Butylacrylat, Maleinsäureanhydrid und N-Phenylmaleinimid oder Mischungen daraus. Bevorzugte Monomere nach C.1.1) sind Styrol, α-Methylstyrol und Methylmethacrylat. Bevorzugte Monomere nach C.1.2) sind Acrylnitril, Maleinsäureanhydrid und Methylmethacrylat. Besonders bevorzugte Monomere sind Styrol und Acrylnitril.

Zur Herstellung der Pfropfpolymerisate gemäß Komponente C) geeignete Kautschuke C.2) sind insbesondere Polybutadiene, Polyisoprene, Styrol-Butadien-Copolymerkautschuke, Acrylnitril-Butadien-Copolymerkautschuke mit Gelgehalten (gemessen bei 20°C) größer als 30 Gew.-%, Acrylatkautschuke, EPDM (Ethylen-Propylen-Dien-Monomer)-Kautschuke und Siliconkautschuke.

Bevorzugte Kautschuke C.2) sind Dienkautschuke (z.B. auf Basis Butadien, Isopren etc ) oder Gemische von Dienkautschuken oder Copolymerisate von Dienkautschuken oder deren Gemische mit weiteren copolymerisierbaren Monomeren, z.B. gemäß C.1.1) und C.1.2), mit der Maßgabe, daß die Glasübergangstemperatur der Komponente C. 2) unterhalb 10°C, vorzugsweise unterhalb -10°C, liegt.

Besonders bevorzugte Polymerisate C.) sind z.B. ABS-Polymerisate, wie sie in der DE-OS 2 035 390 oder in der DE-OS 2 248 242 beschrieben sind.

Geeignete Acrylatkautschuke C.2) sind solche auf Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, α-Methylstyrol, kernalkyliertes Styrol, Methylmethacrylat,

Acrylamide und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomerer enthalten. Solche Vernetzer sind z.B. Alkylendioldi(meth)acrylate, Polyester-di-(meth)-acrylate, Divinylbenzol, Trivinylbenzol, Triallylcyanurat, Allyl(meth)-acrylat, Butadien oder Isopren.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen. Besonders bevorzugte vernetzende Monomere sind hier Triallylcyanurat, Triallylisocyanurat, Trivinylcyanurat, Triacryloylhexahydro-s-triazin, Triallylbenzole. Die Menge der vernetzenden Monomere beträgt vorzugsweise 0,02 bis 5,0 Gew.-%, insbesondere 0,05 bis 2,0 Gew.-%, bezogen auf die Pfropfgrundlage C.2). Bei cyclischen vernetzenden Monomeren mit mindestens 3 ethylenisch ungesättigten Gruppen ist es vorteilhaft, die Menge auf unter 1 Gew.-% der Pfropfgrundlage C.2) zu beschränken.

Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomerem, wie Styrol und/oder Acrylnitril, als Kern enthalten.

Bevorzugte Kautschuke zur Herstellung der Pfropfpolymerisate C) sind reine Dien- und Acrylatkautschuke.

Weitere geeignete Pfropfgrundlagen gemäß C.2) sind Silikonkautschuke mit pfropfaktiven Stellen wie sie in den DE 3 704 657, DE 3 704 655 und DE 3 631 539 beschrieben werden.

Die Kautschuke liegen in den Pfropfpolymerisaten C) in Form wenigstens partiell vernetzter Teilchen einer mittleren Teilchengröße von 0,1 bis 3,0 µm, insbesondere 0,2 bis 0,6 um vor. Sie sind wenigstens teilvernetzt, d.h. sie besitzen Gelgehalte von größer 20 Gew.-%, besonders größer 50 Gew.-%, besonders bevorzugt im Bereich von 73 bis 98 Gew.-% (gemessen in Toluol).

<u>**Komponente D)**</u>

Polyphenylenether der Komponente D) weisen die Formel (IV) auf,

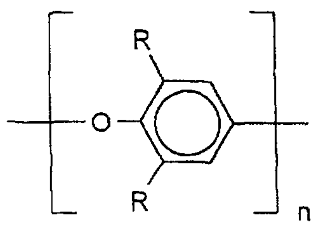

(IV)

worin das Ethersauerstoffatom einer Einheit jeweils mit dem aromatischen Kern der benachbarten Einheit verbunden ist, n eine positive ganze Zahl >20 ist und jedes R für Wasserstoff, Kohlenwasserstoffreste ohne tertiäres $\alpha$-Kohlenstoffatom und Kohlenwasserstoffoxyreste steht.

Polyphenylenether, die der obigen Formel entsprechen, sowie ihre Herstellung durch katalysierte oxidative Kupplung aus Phenolen und Sauerstoff-haltigen Gasen in Gegenwart von Metallaminkomplex-Katalysatoren werden in US-P 3 306 874, 3 306 875, 3 257 357 und 3 257 358 sowie DE-OS 3 035 599 und in Houben-Weyl, Methoden der Organischen Chemie, Bd. E20 (1987), S. 1320-1388, beschrieben.

Geeignete Polyphenylenether sind beispielsweise Poly-(2,6-dimethyl-1,4-phenylen)-ether, Poly-(2,6-diethyl-1,4-phenylen)-ether, Poly-(2-methyl-6-ethyl-1,4-phenylen)-ether, Poly-(2-methyl-6-propyl-1,4-phenylen)-ether, Poly-(2,6-diisopropyl-1,4-phenylen)-ether, Poly-(2-ethyl-6-propyl-1,4-phenylen)-ether oder Copolymere wie solche, die 2,3,6-Trimethylphenol enthalten, außerdem Mischungen verschiedener Polyphenylenether. Bevorzugt ist Poly-(2,6-dimethyl-1,4-phenylen)-ether oder Copolymere aus 2,6-Dimethylphenol und 2,3,6-Trimethylphenol. Die Polyphenylenether weisen im allgemeinen eine Grenzviskosität von 0,3 bis 0,7 dl/g aus, gemessen in einer Chloroform-Lösung bei 25°C.

<u>**Komponente E.1)**</u>

Die erfindungsgemäßen Polymermischungen enthalten als Flammschutzmittel Phosphorverbindungen der Formel (I),

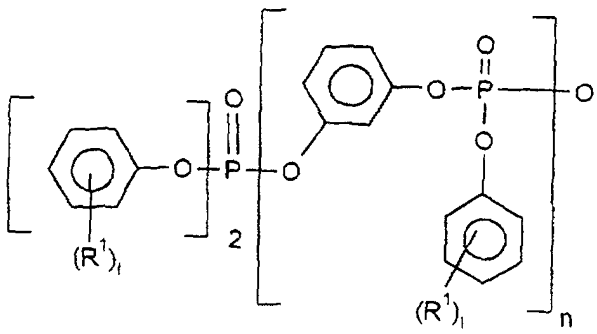

(I)

worin
n, $R^1$ und l die obengenannte Bedeutung haben.

Als erfindungsgemäße Komponente E.1) können auch Mischungen verschiedener oligomerer Phosphate eingesetzt werden. In diesem Fall hat n einen Durchschnittswert zwischen 1 und 5, vorzugsweise 1 und 2.

Als Phosphorverbindung der Formel (I) wird vorzugsweise mit Phenylen-bis(diphenylphosphat) mit n gleich 1 und 2 bzw. zwischen 1 und 2 eingesetzt.

**Komponente E.2)**

Als Flammschutzmittel können die erfindungsgemäßen Mischungen weiterhin eine Mischung aus Phosphorverbindung(en) der Formel (I) und Phosphorverbindung(en) der Formel (II),

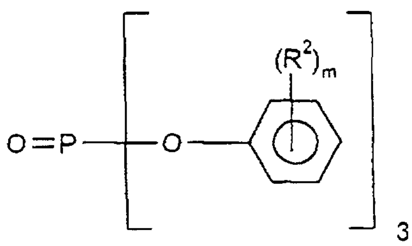

(II)

worin

$R^2$ und m die obengenannte Bedeutung haben,

enthalten.

Als Phosphorverbindung der Formel (II) wird vorzugsweise Triphenylphosphat eingesetzt.

Die Phosphate sind generell nach bekannten Verfahren herstellbar (siehe beispielsweise Ullmann, Enzyklopädie der Technischen Chemie, Bd. 18, S. 301 ff, 1979; Houben-Weyl, Methoden der Organischen Chemie, Bd. 12/1, S. 43; Beilstein, Bd. 6, S. 177).

Die erfindungsgemäßen Formmassen können ferner übliche Additive wie Gleit- und Entformungsmittel, Fließmittel, Nukleiermittel, Antistatika, Stabilisatoren, Füll- und Verstärkungsmittel, Farbstoffe und Pigmente sowie als weiteres Flammschutzmittel für die Polycarbonatkomponente das Salz einer halogenfreien Sulfonsäure enthalten. Bevorzugte Verstärkungsstoffe sind Glasfasern, bevorzugte Füllstoffe Glaskugeln, Glimmer, Quarz, Talkum, Wollastonit, bevorzugte Pigmente Ruß und Titandioxid. Bevorzugtes Salz ist das Kaliumsalz der Diphenylsulfonsulfonsäure.

Die erfindungsgemäßen thermoplastischen Formmassen, enthaltend die Komponenten A) bis E), werden hergestellt, indem man die jeweiligen Bestandteile in bekannter Weise vermischt und bei Temperaturen von 200 bis 280°C in üblichen Aggregaten wie Innenknetern, Extrudern oder Doppelwellenschnecken schmelzcompoundiert.

Die Vermischung der einzelnen Bestandteile kann in bekannter Weise sowohl sukzessiv als auch simultan erfolgen, und zwar bei höherer Temperatur.

Die jeweiligen Komponenten können sowohl einzeln als auch im Gemisch eingesetzt werden, z.B. mehrere Polycarbonate oder Copolymerisate etc.

Gegenstand der vorliegenden Erfindung ist somit auch ein Verfahren zur Herstellung von thermoplastischen Polycarbonatformmassen, bestehend aus den Komponenten A) bis E), das dadurch gekennzeichnet ist, daß man die jeweiligen der vorstehend genannten Bestandteile in bekannter Weise vermischt und danach bei Temperaturen von 200°C bis 300°C, vorzugsweise bis 280°C in üblichen Aggregaten schmelzcompoundiert oder schmelzextrudiert.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte und Büromaschinen) oder Abdeckplatten für den Bausektor, Teile für den Kfz-Sektor. Sie werden außerdem auf dem Gebiet der Elektrotechnik eingesetzt, weil sie sehr gute elektrische Eigenschaften besitzen.

Besonders geeignet sind die Formmassen zur Herstellung von dünnwandigen Formteilen (z.B. Datentechnik-Gehäuseteile), wo besonders hohe Ansprüche an Kerbschlagzähigkeit, Spannungsrißverhalten und Formbeständigkeit der eingesetzten Kunststoffe gestellt werden.

Teilchengröße bedeutet immer mittlerer Teilchendurchmesser $d_{50}$, ermittelt durch Ultrazentrifugenmessungen nach W. Scholtan et al., Kolloid-Z. und Z. Polymere 250 (1972), 782 bis 796.

## Beispiele

### Verwendete Materialien

Komponente A) (PC 1)

Polycarbonat auf Basis Bisphenol A mit einer relativen Lösungsviskosität von 1,34, gemessen in Methylenchlorid bei 25°C und einer Konzentration von 0,5 g/100 ml.

Komponente A) (PC 2)

Polycarbonat auf Basis Bisphenol A mit einer relativen Lösungsviskosität von 1,29, gemessen in Methylenchlorid bei 25°C und einer Konzentration von 0,5 g/100 ml.

Komponente B) (SAN)

Styrol/Acrylnitril-Copolymerisat mit einem Styrol/Acrylnitril-Verhältnis von 72:28 und einer Grenzviskosität von 55 dl/g (Messung in Dimethylformamid bei 20°C).

Komponente C) (ABS)

Pfropfpolymerisat von 45 Gew.-% Styrol/Acrylnitril-Gemisch im Verhältnis 72:28) auf 55 Gew.-% teilchenförmigem vernetztem Polybutadienkautschuk (mittlerer Teilchendurchmesser $d_{50}$ = 0,4 μm), hergestellt durch Emulsionspolymerisation.

Komponente D) (PPO)

Polyphenylenoxid, hergestellt aus 2,6-Dimethylphenol nach DE-OS 3 035 599 (Beispiel), mit einer Grenzviskosität von 0,42 dl/g, gemessen in Chloroform bei 25°C.

Komponente E.1) (RDP)

m-Phenylen-bis-(diphenylphosphat) (Fyroflex RDP, Firma AKZO B.V.).

Komponente E.2) (RDP + TPP)

Mischung aus 75,0 Gew.-% m-Phenylen-bis-(diphenylphosphat) (s.o.) und 25,0 Gew.-% Triphenylphosphat (Disflamoll TP, Firma BAYER AG).

Weitere Phosphatkomponente (TPP)

Triphenylphosphat (Disflamoll TP, BAYER AG).

Weitere Phosphatkomponente (TIPP)

Triisopropylphenylphosphat (Reofos 95, Firma CIBA-GEIGY Industrial Chemicals).

**Herstellung und Prüfung der Formmassen**

Die Herstellung der flammwidrigen thermoplastischen Formmassen erfolgte durch Kneten in einem Kleinkneter vom Typ W 50 E der Firma Brabender OHG Duisburg im Temperaturbereich von 210 bis 230°C, einer Drehzahl von 60 $Min^{-1}$ und einer Knetdauer von 10 Min. Die so hergestellte Formmasse wurde auf einer elektrisch beheizten Laborpresse vom Typ Polystat 200 T der Firma Schwabenthan zu Platten von 2,1 bzw. 1,6 mm gepreßt, die Preßtemperatur betrug 200°C, der Preßdruck 200 bar und die Dauer 5 Min.

**Tabelle 1** Eingesetzte Komponenten (Angaben in Gew.-%)

| Komponente | A) PC 1 | A) PC 2 | B) SAN | C) ABS | D) PPO | E.1) RDP | E2) RDP+TPP | TPP | TIPP |
|---|---|---|---|---|---|---|---|---|---|
| Vergleich 1 | 70,0 | | 5,0 | 10,0 | | 15,0 | | | |
| Vergleich 2 | | 70,0 | 5,0 | 10,0 | | 15,0 | | | |
| Vergleich 3 | 68,0 | | 5,0 | 10,0 | 2,0 | 15,0 | | | |
| Vergleich 4 | 60,0 | | 5,0 | 10,0 | 10,0 | 15,0 | | | |
| Vergleich 5 | | 60,0 | 5,0 | 10,0 | 10,0 | 15,0 | | | |
| Vergleich 6 | 65,0 | | 5,0 | 10,0 | 5,0 | | | 15,0 | |
| Vergleich 7 | 65,0 | | 5,0 | 10,0 | 5,0 | | | | 15,0 |
| Vergleich 8 | 69,7 + 0,3 % PTFE | | 5,0 | 10,0 | | 15,0 | | | |

**Tabelle 1** - Fortsetzung

| Komponente | A) PC 1 | A) PC 2 | B) SAN | C) ABS | D) PPO | E.1) RDP | E2) RDP+TPP | TPP | TIPP |
|---|---|---|---|---|---|---|---|---|---|
| Beispiel 1 | 67,0 | | 5,0 | 10,0 | 3,0 | 15,0 | | | |
| Beispiel 2 | 66,0 | | 5,0 | 10,0 | 4,0 | 15,0 | | | |
| Beispiel 3 | 65,0 | | 5,0 | 10,0 | 5,0 | 15,0 | | | |
| Beispiel 4 | | 65,0 | 5,0 | 10,0 | 5,0 | 15,0 | | | |
| Beispiel 5 | 68,0 | | 5,0 | 10,0 | 5,0 | 12,0 | | | |
| Beispiel 6 | 65,0 | | 5,0 | 10,0 | 5,0 | | 15,0 | | |
| Beispiel 7 | | 65,0 | 5,0 | 10,0 | 5,0 | | 15,0 | | |
| Beispiel 8 | Zusammensetzung wie Beispiel 3 | | | | | | | | |
| Beispiel 9 | Zusammensetzung wie Beispiel 4 | | | | | | | | |
| Beispiel 10 | Zusammensetzung wie Beispiel 6 | | | | | | | | |
| Beispiel 11 | Zusammensetzung wie Beispiel 7 | | | | | | | | |

Aus den Platten wurden die benötigten Prüfplatten gesägt, diese den folgenden Tests unterzogen:

- Schlagzähigkeit nach DIN 53 543 ($a_n$),
- Wärmeformbeständigkeit nach DIN 53 460 (Vicat B),
- Sauerstoffindex (LOI-Wert) nach ASTM D-2863-77,
- Brandtest nach Vorschrift Underwriter Laboratories (UL-94),
- Spannungsrißverhalten.

Das Spannungsrißverhalten wurde an Stäben der Abmessung 80x10x4 mm, Preßtemperatur 220°C, untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung in Prozent) und bei Raumtemperatur im Testmedium gelagert. Das Spannungsrißverhalten wurde über die Rißbildung bzw. den Bruch in Abhängigkeit von der Expositionszeit im Testmedium beurteilt.

Tabelle 2 zeigt die erhaltenen Prüfdaten.

Tabelle 2:

| Prüfdaten | | | | | | | |
|---|---|---|---|---|---|---|---|
| | | | | UL 94-Bewertung | | Span./Riß-Verhalten | |
| | Prüfdaten $a_n$ | Vicat B °C | LOI-Index % $O_2$ | Dicke des Prüfkörpers | Nachbrenn-Zeit Sek. | Vorspannung % | Zeit bis Bruch Min. |
| Vergleich 1 | 46/n.g.* | 87 | 28,5 | V-2/2,1mm | 60 | | |
| Vergleich 2 | 45/n.g. | 87 | | V-2/2,1mm | 74 | | |
| Vergleich 3 | 54/n.g. | 89 | 30,0 | V-2/2,1mm | 41 | | |
| Vergleich 4 | 25/ g.** | 101 | | V-0/2,1mm | 10 | | |
| Vergleich 5 | 17/ g. | 101 | | V-0/2,1mm | 10 | | |
| Vergleich 6 | 40/n.g. | 80 | 27,5 | V-0/2,1mm | 30 | | |
| Vergleich 7 | 55/n.g. | 95 | 27,5 | V-2/2,1mm | 61 | | |
| Vergleich 8 | 55/n.g. | 92 | | V-0/2,1mm | 10 | | |
| | | | | | | | |
| Beispiel 1 | 54/n.g. | 88 | 30,5 | V-0/2,1mm | 13 | | |
| Beispiel 2 | 56/n g. | 89 | | V-0/2,1mm | 14 | | |
| Beispiel 3 | 49/n.g. | 89 | 32,5 | V-0/2,1mm | 12 | 1,2 | 17,0 |
| Beispiel 4 | 47/n g. | 89 | | V-0/2,1mm | 15 | 0,6 | 0,5 |
| Beispiel 5 | 56/n.g. | 98 | 33,5 | V-0/2,1mm | 11 | | |
| Beispiel 6 | 49/n.g. | 86 | 33,5 | V-0/2,1mm | 22 | 1,2 | 22,0 |
| Beispiel 7 | 47/n.g. | 86 | | V-0/2,1mm | 23 | 0,6 | 3,5 |
| Beispiel 8 | 27/n.g | 89 | 32,5 | V-0/1,6mm | 33 | | |
| Beispiel 9 | 27/n.g. | 89 | | V-0/1,6mm | 37 | | |

*n g = nicht gebrochen,

** g. = gebrochen

Tabelle 2: (fortgesetzt)

| Prüfdaten | | | | | | | |
|---|---|---|---|---|---|---|---|
| | | | | UL 94-Bewertung | | Span./Riß-Verhalten | |
| | Prüfdaten $a_n$ | Vicat B °C | LOI-Index % $O_2$ | Dicke des Prüfkörpers | Nachbrenn-Zeit Sek. | Vorspannung % | Zeit bis Bruch Min. |
| Beispiel 10 | 28/n.g | 86 | 33,5 | V-0/1,6mm | 11 | | |
| Beispiel 11 | 27/n g. | 86 | | V-0/1,6mm | 29 | | |

Aus den Tabellen 1 und 2 geht hervor, daß die erfindungsgemäßen Formmassen (Beispiele 1 bis 11)

- mit einem Gehalt von 3 bis 5 Gew.-% Polyphenylenoxid und 12 bis 15 Gew.-% m-Phenylen-bis-(diphenylphosphat) nicht tropfend ein V-O bei 2,1 mm (Beispiele 1 bis 5), ja sogar bei 1,6 mm dicken Prüfkörpern (Beispiele 8 und 9),
- mit einem Gehalt von 3 bis 5 Gew.-% Polyphenylenoxid und 15 Gew.-% Gemisch aus m-Phenylen-bis-(diphenylphosphat) und Triphenylphosphat (75 und 25 Gew.-%) ebenfalls ein V-O bei 2,1 bzw. 1,6 mm nicht tropfend (Beispiele 6 und 7 sowie 10 und 11),
- mit vorstehender Menge Polyphenylenoxid und Phosphatgemisch verbesserte Spannungsrißbeständigkeit (Beispiele 6 und 7 gegenüber 3 und 4),
- Schlagzähigkeiten und Wärmeformbeständigkeiten von üblichem, hohem Eigenschaftsniveau

aufweisen.

Fehlt die Polyphenylenoxid-Komponente,

- kommt den Proben nur ein V-2 zu (Vergleichsbeispiele 1 und 2),
- ist ihr Gehalt 2,0 %, so wird ebenfalls nur ein V-2 erhalten (Vergleich 3),
- ist er z.B. 10 %, liegt das Brandverhalten zwar bei V-0, das Material ist aber versprödet (Vergleichsbeispiele 4 und 5)

Wird neben Polyphenylenoxid allein Triphenylphosphat eingesetzt,

- so liegt ebenfalls eine Probe mit V-0 vor, die Erweichungstemperatur ist aber auf 80°C abgesunken (Vergleichsbeispiel 6).

Bei Verwendung anderer Phosphate wird diese Beurteilung nicht erreicht,

- kommt Tri-isopropylphenyl-phosphat zur Anwendung, so wird nur ein V-2 erhalten (Vergleichsbeispiel 7).

Beispiel 5 und Vergleichsbeispiel 8 zeigen, daß kleine Mengen Polyphenylenoxid mit üblichen Mengen m-Phenylen-bis-(diphenylphosphat), auch in Mischung mit Triphenylphosphat (Beispiele 6 und 7), verbunden mit dem großen Vorteil der Halogenfreiheit die Antidripping-Eigenschaft des Polytetrafluorethylens gleichwertig übernehmen können.

**Patentansprüche**

1. Thermoplastische Formmassen, bestehend aus

    A) 60 bis 90 Gew.-% thermoplastischem aromatischem Polycarbonat,

    B) 0 bis 20 Gew.-% Copolymerisat bzw. Polykondensat aus

B.1) thermoplastischem Copolymerisat aus

B.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat, oder Mischungen daraus und

B.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid, Vinylacetat oder Mischungen daraus und/oder

B.2) thermoplastischem Polyalkylenterephthalat,

C) 3 bis 18 Gew.-% Pfropfpolymerisat hergestellt aus

C.1) 5 bis 90 Gew.-% einer Mischung aus

C.1.1) 50 bis 95 Gew.-% Styrol, α-Methylstyrol, kernalkyliertem Styrol, Methylmethacrylat oder Mischungen daraus, und

C.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid oder Mischungen daraus, auf

C.2) 10 bis 95 Gew.-% Kautschuk mit einer Glastemperatur TG $\leq 10°C$,

D) 3 bis 8 Gew.-% thermoplastischem Polyphenylenether,

E) 3 bis 18 Gew.-% Phosphorsäureester aus

E.1) Phosphorverbindungen der Formel (I)

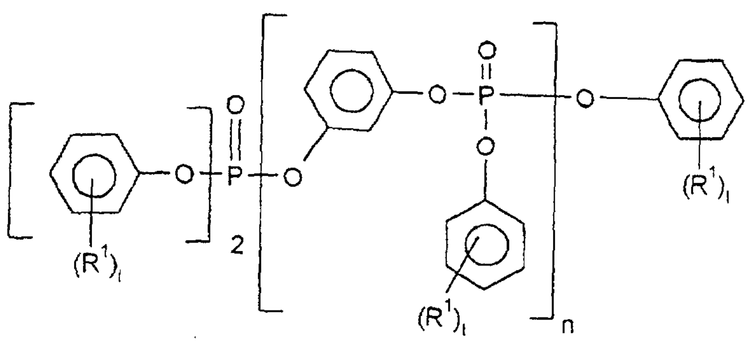

(I)

worin

n die Zahlen 1 bis 5,

$R^1$ Methyl und

l die Zahlen 0 bis 5 sind;

oder

E.2) einer Mischung aus Phosphorverbindungen der Formel (I) und Phosphorverbindungen der Formel (II)

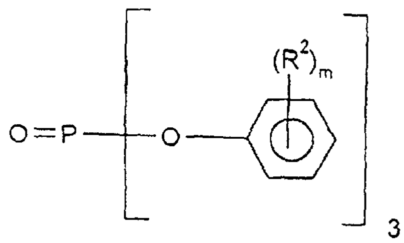

(II)

worin

$R^2$ Methyl und

m die Zahlen 0 bis 5 sind,

wobei die Menge an Phosphorverbindungen der Formel (II) in der Phosphatmischung aus E.1) und E.2) maximal 35 Gew.-%, beträgt.

**2.** Thermoplastische Formmassen gemäß Anspruch 1, wobei die Komponente D in einer Menge von 3 bis 6 gew. % enthalten ist.

**3.** Thermoplastische Formmassen gemäß Anspruch 1, wobei die Komponenten

A) in einer Menge von 60 bis 90 Gew.-%,

B) in einer Menge von 1 bis 15 Gew.-%,

C) in einer Menge von 5 bis 15 Gew.-%,

D) in einer Menge von 3 bis 6 Gew.-% und

E) in einer Menge von 5 bis 15 Gew.-%

enthalten sind.

**4.** Thermoplastische Formmassen gemäß Anspruch 1, **dadurch gekennzeichnet, daß** als Komponente E) m-Phenylen-bis-(diphenylphosphat) und/oder eine Mischung aus m-Phenylen-bis-(diphenyl)-phosphat, Triphenylphosphat eingesetzt werden.

**5.** Thermoplastische Formmassen gemäß Anspruch 1, die zusätzlich Zusatzstoffe wie Gleit- und Entformungsmittel, Fließmittel, Nukleiermittel, Stabilisatoren, Antistatika, Füll- und Verstärkungsmittel, Farbstoffe und/oder Pigmente sowie das Salz einer halogenfreien Sulfonsäure enthalten.

**6.** Verfahren zur Herstellung von thermoplastischen Formmassen gemäß Anspruch 1, wobei man die Komponenten A) bis E) in bekannter Weise vermischt und bei Temperaturen von 200°C bis 300°C in üblichen Aggregaten schmelzcompoundiert oder schmelzextrudiert.

**7.** Verwendung von thermoplastischen Formmassen gemäß Anspruch I zur Herstellung von Formkorpern.

**8.** Formkörper, hergestellt aus thermoplastischen Formmassen gemäß Anspruch 1.

## Claims

**1.** Thermoplastic moulding compositions consisting of

A) 60 to 90 wt.% of thermoplastic aromatic polycarbonate,

B) 0 to 20 wt.% of copolymer or polycondensation product prepared from

B.1) thermoplastic copolymer prepared from

B.1.1) 50 to 95 wt.% of styrene, α-methylstyrene, ring-alkylated styrene, $C_1$-$C_8$ alkyl acrylate, $C_1$-$C_8$ alkyl methacrylate or mixtures thereof and

B.1.2) 5 to 50 wt.% of acrylonitrile, methacrylonitrile, $C_1$-$C_8$ alkyl acrylate, $C_1$-$C_8$ alkyl methacrylate, maleic anhydride, N-substituted maleimide, vinyl acetate or mixtures thereof and/or

B.2) thermoplastic polyalkylene terephthalate,

C) 3 to 18 wt.% of graft polymer produced from

C.1) 5 to 90 wt.% of a mixture prepared from

C.1.1) 50 to 95 wt.% of styrene, α-methylstyrene, ring-alkylated styrene, methyl methacrylate or mixtures thereof and

C.1.2) 5 to 50 wt.% of acrylonitrile, methacrylonitrile, $C_1$-$C_8$ alkyl acrylate, $C_1$-$C_8$ alkyl methacrylate, maleic anhydride, N-substituted maleimide or mixtures thereof on

C.2) 10 to 95 wt.% of rubber with a glass transition temperature $T_g$ of ≤ 10°C,

D) 3 to 8 wt.% of thermoplastic polyphenylene ether,

E) 3 to 18 wt.% of phosphoric acid ester prepared from

E.1) phosphorus compounds of the formula (I),

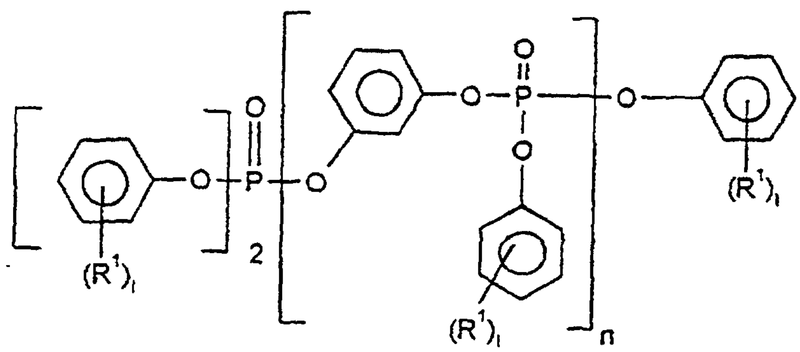

(I)

in which

n is the numbers 1 to 5,

$R^1$ is methyl and

l is the numbers 0 to 5;

or

E.2) a mixture of phosphorus compounds of the formula (I) and phosphorus compounds of the formula (II),

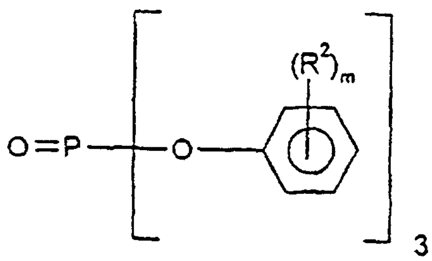

(II)

in which

$R^2$ is methyl and

m is the numbers 0 to 5,

wherein the quantity of phosphorus compounds of the formula (II) in the phosphate mixture prepared from E.1) and E.2) is at most 35 wt.%.

**2.** Thermoplastic moulding compositions according to claim 1, wherein component D is present in a quantity of 3 to 6 wt.%.

**3.** Thermoplastic moulding compositions according to claim 1, wherein the components are present in the following quantities:

A) 60 to 90 wt.%,

B) 1 to 15 wt.%,

C) 5 to 15 wt.%,

D) 3 to 6 wt.% and

E) 5 to 15 wt.%.

**4.** Thermoplastic moulding compositions according to claim 1, **characterised in that** m-phenylene-bis(diphenyl phosphate) and/or a mixture m-phenylene-bis(diphenyl phosphate) and triphenyl phosphate are used as component E).

**5.** Thermoplastic moulding compositions according to claim 1 which additionally contain additives such as lubricants and mould release agents, plasticisers, nucleating agents, stabilisers, antistatic agents, fillers and reinforcing materials, dyes and/or pigments together with the salt of a halogen-free sulphonic acid.

**6.** Process for the production of thermoplastic moulding compositions according to claim 1, wherein components A) to E) are mixed in a known manner and melt-compounded or melt-extruded at temperatures of 200°C to 300°C in conventional equipment.

**7.** Use of thermoplastic moulding compositions according to claim 1 for the production of mouldings.

**8.** Mouldings produced from thermoplastic moulding compositions according to claim 1.

## Revendications

**1.** Masses à mouler thermoplastiques constituées de

A) 60 à 90% en poids de polycarbonate aromatique thermoplastique,

B) 0 à 20% en poids de copolymère ou de produit de polycondensation préparé à partir de

B.1) un copolymère thermoplastique préparé à partir de

B.1.1) 50 à 95% en poids de styrène, d'α-méthylstyrène, de styrène cycloalkylé, d'acrylate d'alkyle en $C_1$-$C_8$, de méthacrylate d'alkyle en $C_1$-$C_8$, ou de leurs mélanges et
B.1.2) 5 à 50% en poids d'acrylonitrile, de méthacrylonitrile, d'acrylate d'alkyle en $C_1$-$C_8$, de méthacrylate d'alkyle en $C_1C_8$, d'anhydride maléique, de maléimide N-substitué, d'acétate de vinyle ou de leurs mélanges et/ou

B.2) un poly(téréphtalate d'alkylène) thermoplastique,

C) 3 à 18% en poids d'un polymère greffé préparé à partir de

C.1) 5 à 90% en poids, d'un mélange préparé à partir de

C.1.1) 50 à 95% en poids de styrène, d'α-méthylstyrène, de styrène cycloalkylé, de méthacrylate de méthyle ou de leurs mélanges, et
C.1.2) 5 à 50% en poids d'acrylonitrile, de méthacrylonitrile, d'acrylate d'alkyle en $C_1$-$C_8$, de méthacrylate d'alkyle en $C_1$-$C_8$, d'anhydride maléique, de maléimide N-substitué ou de leurs mélanges,

C.2) 10 à 95% en poids de caoutchouc avec une température de transition vitreuse $TG \leq 10°C$,

D) 3 à 8% en poids de poly(éther de phénylène) thermoplastique,
E) 3 à 18% en poids d'ester d'acide phosphorique préparé à partir de

E.1) des composés phosphorés de formule (I),

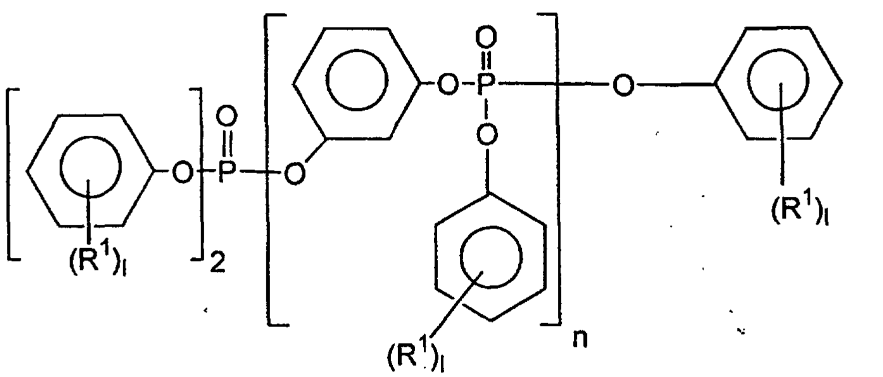

(I)

dans laquelle

n est un nombre de 1 à 5,
$R^1$ est un groupe méthyle et
l est un nombre de 0 à 5 ;

ou
E. 2) un mélange de composés phosphorés de formule (I) et de composés phosphorés de formule (II),

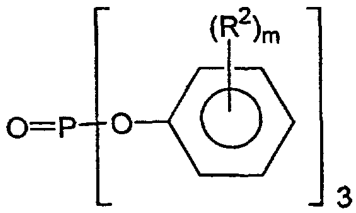

(II)

dans laquelle

$R^2$ est le groupe méthyle et
m est un nombre de 0 ou 1 à 5,

la quantité de composés phosphorés de formule (II) dans le mélange de phosphate préparé à partir de E. 1) et E. 2) étant au plus de 35% en poids.

**2.** Masses à mouler thermoplastiques selon la revendication 1, **caractérisées en ce qu'**elles contiennent le composant D en une quantité de 3 à 6% en poids.

**3.** Masses à mouler selon la revendication 1, **caractérisées en ce qu'**elles contiennent les composants

A) en une quantité de 60 à 90% en poids,
B) en une quantité de 1 à 15% en poids,
C) en une quantité de 5 à 15% en poids,
D) en une quantité de 3 à 6% en poids, et
E) en une quantité de 5 à 15% en poids.

**4.** Masses à mouler selon la revendication 1, **caractérisées en ce que** les composants E) sont le m-phénylèn-bis-(diphénylphosphate) et/ou un mélange de m-phénylèn-bis-(diphénylphosphate), de triphénylphosphate.

**5.** Masses à mouler selon la revendication 1, **caractérisées en ce qu'**elles contiennent en outre des additifs comme des lubrifiants et des agents de démoulage, des plastifiants, des agents de nucléation, des stabilisants, des agents antistatiques, des charges et des matériaux de renforcement, des colorants et/ou des pigments ainsi que le sel d'un acide sulfonique exempt d'halogène.

**6.** Procédé de préparation de masses à mouler thermoplastiques selon la revendication 1, **caractérisé en ce qu'**on mélange d'une manière connue les composants A à E) et on les mélange à l'état fondu ou on les extrude à l'état fondu en agrégats classiques.

**7.** Utilisation des masses à mouler thermoplastiques selon la revendication 1 pour la préparation de corps moulés.

**8.** Corps moulé préparé à partir de masses à mouler selon la revendication 1.